# EUROPEAN PATENT APPLICATION

(11) **EP 4 152 222 A1**
(43) Date of publication of application: **22.03.2023**
(21) Application number: 20934908.3
(22) Date of filing: 11.05.2020
(51) Int. Cl.: G06N 20/00

(54) **MACHINE LEARNING PROGRAM, MACHINE LEARNING METHOD, AND MACHINE LEARNING DEVICE**

(71) Applicant: FUJITSU LIMITED, Kawasaki-shi, Kanagawa 211-8588 (JP)
(72) Inventor: MATSUO, Tatsuru, Kawasaki-shi, Kanagawa 211-8588 (JP)
(74) Representative: Hoffmann Eitle
(86) International application number: PCT/JP2020/018777
(87) International publication number: WO 2021/229630

(57) **Abstract**

A computer is caused to execute processing including: clustering a plurality of pieces of data; generating a model by machine learning that uses data classified into a first group by the clustering; and verifying output accuracy of the generated model by using data classified into a second group by the clustering, so that overfitting may be avoided.

## Description

### FIELD

The present invention relates to a machine learning technology.

### BACKGROUND

As one of methods of machine learning, supervised learning is known in which input/output relationships are learned by using teacher data (data with a correct answer) including input data and output data.

Furthermore, in supervised machine learning, it is generally known that a model (machine learning model) is created by using a part of a plurality of pieces of teacher data as model creation data (training data), and overfitting is determined by using a remaining part of the plurality of pieces of teacher data as model verification data (evaluation data).

Here, "overfitting" refers to a situation in which a model is optimized only for training data and falls into a state without versatility, and the model creation data may be predicted with high accuracy, but other data may be predicted with low accuracy.

In the overfitting determination method by using a part of the pieces of teacher data as the model verification data described above, an overfitting state is determined in a case where prediction accuracy when the model creation data is predicted and prediction accuracy when the model verification data is predicted are significantly different by using the created model.

### CITATION LIST

### PATENT DOCUMENT

Patent Document 1: Japanese Laid-open Patent Publication No. 2019-66993

### SUMMARY

### [TECHNICAL PROBLEM]

However, in a case where there is bias when teacher data is acquired, there may be an exceptional cluster when viewed over an entire input data space.

Note that "bias" as used herein relates to an input, and refers to a situation in which a group (cluster) of data whose inputs are so similar that they may not occur by chance are included in the teacher data. Such bias may occur due to circumstances such as restrictions on teacher data that may be acquired.

Creating a model that correctly predicts even data of such an exceptional cluster tends to cause overfitting. However, as described above, since both of the model creation/verification data may be predicted with high accuracy, the overfitting may not be detected.

In one aspect, an object is to suppress overfitting.

### [SOLUTION TO PROBLEM]

Therefore, the machine learning program causes a computer to execute processing including: clustering a plurality of pieces of data; generating a model by machine learning that uses data classified into a first group by the clustering; and verifying output accuracy of the generated model by using data classified into a second group by the clustering.

According to an aspect of the embodiments, a machine learning program for causing a computer to execute processing includes clustering a plurality of pieces of data; generating a model by machine learning that uses data classified into a first group by the clustering; and verifying output accuracy of the generated model by using data classified into a second group by the clustering.

### [ADVANTAGEOUS EFFECTS OF INVENTION]

According to one embodiment, overfitting may be suppressed.

### BRIEF DESCRIPTION OF DRAWINGS

FIG. 1 is a diagram exemplarily illustrating a hardware configuration of a computer system as an example of an embodiment;
FIG. 2 is a diagram exemplarily illustrating a functional configuration of the computer system as an example of the embodiment;
FIG. 3 is a diagram illustrating an outline of a neural network;
FIG. 4 is a diagram for describing a clustering method by a clustering processing unit of the computer system as an example of the embodiment;
FIG. 5 is a diagram for describing processing by a data creation unit of the computer system as an example of the embodiment;
FIG. 6 is a diagram for describing processing by a model creation unit of the computer system as an example of the embodiment;
FIG. 7 is a diagram for describing processing by a prediction processing unit of the computer system as an example of the embodiment;
FIG. 8 is a diagram for describing processing by a verification unit of the computer system as an example of the embodiment;
FIG. 9 is a flowchart for describing processing in the computer system as an example of the embodiment;
FIG. 10 is a diagram for describing binary classification performed by a training processing unit of the computer system as an example of the embodiment;
FIG. 11 is a diagram illustrating extracted model creation clusters in FIG. 10;
FIG. 12 is a diagram illustrating extracted model verification clusters in FIG. 10; and
FIG. 13 is a diagram for describing overfitting in a machine learning method.

### DESCRIPTION OF EMBODIMENTS

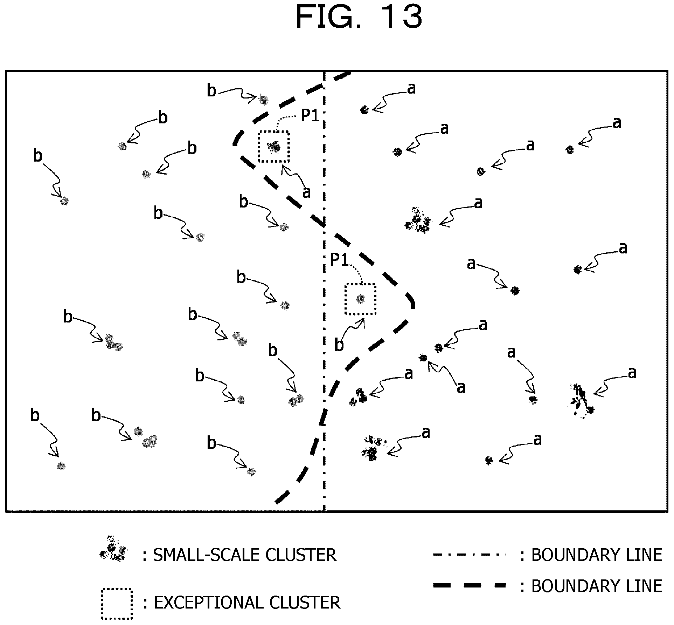

FIG. 13 is a diagram for describing overfitting in a machine learning method, and exemplarily illustrates teacher data arranged in an input data space. In FIG. 13, an input data space in which a large number of minute points are arranged is exemplarily illustrated. Each of the minute points represents teacher data, and each is plotted at a position corresponding to input data.

Furthermore, in the input data space, a plurality of small-scale clusters (data groups) is formed by locally collecting a plurality of pieces of teacher data (minute points). In FIG. 13, a cluster including a set of pieces of teacher data is denoted by a reference sign a or a reference sign b.

These reference sign a and reference sign b represent an output of the teacher data, and each output of the teacher data constituting the cluster denoted by the reference sign a is a, and each output of the teacher data constituting the cluster denoted by the reference sign b is b. In other words, in the example illustrated in FIG. 13, binary classification that predicts a or b is represented.

In the example illustrated in FIG. 13, a thick broken line indicates a boundary of prediction in a case where a highly accurate model that may solve all problems correctly is created by using a model creation data. In the model, the output of the teacher data positioned on a left side of the thick broken line is predicted to be b, and the output of the teacher data positioned on a right side of the thick broken line is predicted to be a.

Here, in the teacher data on the input data space exemplarily illustrated in FIG. 13, model creation data and model verification data are mixed, and also in the teacher data that constitutes each cluster, model creation data and model verification data are mixed. In that case, the model that performs prediction with the thick broken line in FIG. 13 as the boundary may perform prediction with high accuracy for both the model creation data and the model verification data.

However, in a case where there is bias when the teacher data is acquired, there may be an exceptional cluster when viewed over the entire input data space.

Creating a model that correctly predicts even data of such an exceptional cluster tends to cause overfitting. However, as described above, since both of the model creation/verification data may be predicted with high accuracy, the overfitting may not be detected. For example, in FIG. 13, in a case where a cluster surrounded by a square dotted line indicated by denoting a reference sign P1 is the exceptional cluster, in the input data space illustrated in FIG. 13, the model that performs prediction with the thick broken line as the boundary is in an overfitting state, and a model that performs prediction with an alternate long and short dash line as the boundary in the same figure is more desirable. In machine learning, it is desired to suppress such overfitting.

Hereinafter, an embodiment of a machine learning program, a machine learning method, and a machine learning apparatus will be described with reference to the drawings. Note that the embodiment to be described below is merely an example, and there is no intention to exclude application of various modifications and technologies not explicitly described in the embodiment. In other words, the present embodiment may be variously modified (by combining the embodiment and each of modifications, for example) and performed without departing from the spirit of the present embodiment. Furthermore, each drawing is not intended to include only components illustrated in the drawing, and may include another function and the like.

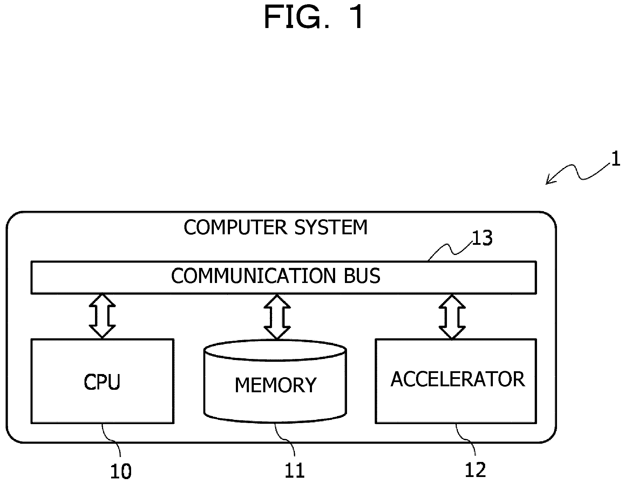

FIG. 1 is a diagram exemplarily illustrating a hardware configuration of a computer system 1 as an example of the embodiment. The computer system 1 is a machine learning apparatus, and implements, for example, a neural network. As illustrated in FIG. 1, the computer system 1 includes a central processing unit (CPU) 10, a memory 11, and an accelerator 12. These CPU 10, memory 11, and accelerator 12 are communicably connected to each other via a communication bus 13. The communication bus 13 performs data communication in this computer system 1.

The memory 11 is a storage memory including a read only memory (ROM) and a random access memory (RAM). In the ROM of the memory 11, a program executed by the CPU 10 described later and data or the like for the program are written. A software program on the memory 11 is appropriately read and executed by the CPU 10. Furthermore, the RAM of the memory 11 is used as a primary storage memory or a working memory. In the RAM of the memory 11, teacher data (model creation data and model verification data), information constituting a model, a prediction result using the model, and the like are also stored. The accelerator 12 executes, for example, operation processing needed for calculation of the neural network, such as matrix operation.

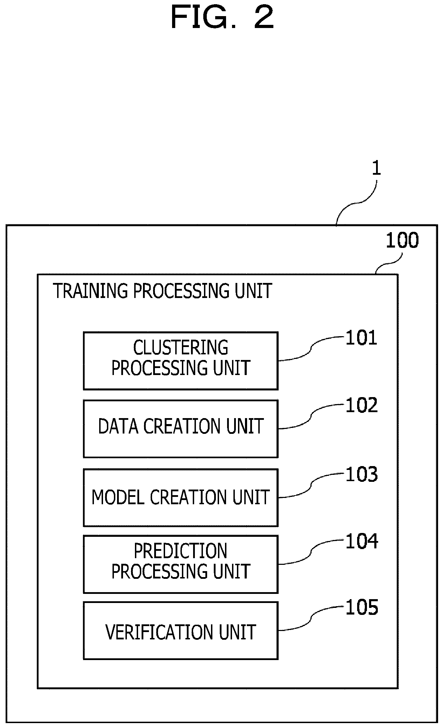

The CPU 10 is a processing device (processor) that performs various types of control and operation, and controls the entire computer system 1 based on the mounted program. Then, the CPU 10 executes a machine learning program (not illustrated) stored in the memory 11 or the like to implement a function as a training processing unit 100 (refer to FIG. 2) described later. The computer system 1 functions as the machine learning apparatus by executing the machine learning program.

Note that the program (machine learning program) for implementing the function as the training processing unit 100 is provided in a form recorded in a computer-readable recording medium such as a flexible disk, a CD (CD-ROM, CD-R, CD-RW, or the like), a DVD (DVD-ROM, DVD-RAM, DVD-R, DVD+R, DVD-RW, DVD+RW, HD DVD, or the like), a Blu-ray disc, a magnetic disc, an optical disc, or a magneto-optical disc, for example. Then, the computer (computer system 1) reads the program from the recording medium to forward the program to an internal storage device or an external storage device and stores the program to use. Furthermore, for example, the program may be recorded in a storage device (recording medium) such as a magnetic disc, an optical disc, or a magneto-optical disc and provided from the storage device to the computer via a communication path.

When the function as the training processing unit 100 is implemented, the program stored in the internal storage device (the RAM or the ROM of the memory 11 in the present embodiment) is executed by a microprocessor (the CPU 10 in the present embodiment) of the computer. At this time, the computer may read and execute the program recorded in the recording medium.

FIG. 2 is a diagram exemplarily illustrating a functional configuration of the computer system 1 as an example of the embodiment. As illustrated in FIG. 2, the computer system 1 has the function as the training processing unit 100. The training processing unit 100 performs, for example, deep learning in the neural network.

The neural network may be a hardware circuit, or may be a virtual network by software connecting between layers virtually constructed on a computer program by the CPU 10 or the like.

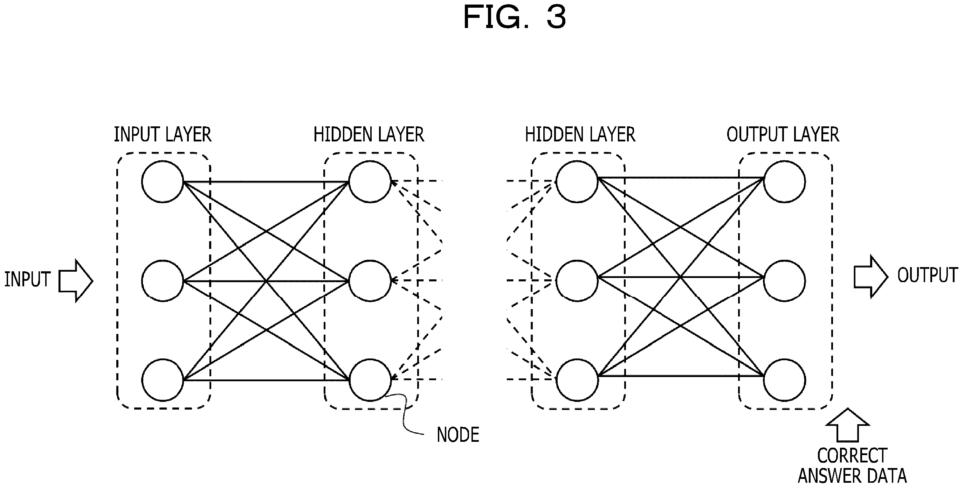

In FIG. 3, an outline of the neural network is illustrated. The neural network illustrated in FIG. 3 is a deep neural network including a plurality of hidden layers between an input layer and an output layer. The hidden layer is, for example, a convolution layer, a pooling layer, or a fully connected layer. In FIG. 3, each circle indicated in each layer indicates a node that executes a predetermined calculation.

By inputting input data to the input layer and sequentially executing predetermined calculation in the hidden layer including a convolution layer, a pooling layer, or the like, the neural network executes processing in a forward direction (forward propagation processing) that sequentially transmits information obtained by operation from an input side to an output side. After the processing in the forward direction is executed, in order to reduce a value of an error function obtained from output data output from the output layer and correct answer data, processing in a backward direction (backward propagation processing) that determines parameters used in the processing in the forward direction is executed. Then, update processing of updating variables such as weights is executed based on a result of the backward propagation processing.

As illustrated in FIG. 2, the training processing unit 100 includes a clustering processing unit 101, a data creation unit 102, a model creation unit 103, a prediction processing unit 104, and a verification unit 105.

The clustering processing unit 101 creates a plurality of clusters (data groups) by performing clustering on a plurality of pieces of teacher data so that bias may be recognized. The teacher data may be stored in a storage device (not illustrated) in advance, or may be input from outside this computer system 1. The clustering processing unit 101 performs hierarchical clustering on the plurality of pieces of teacher data.

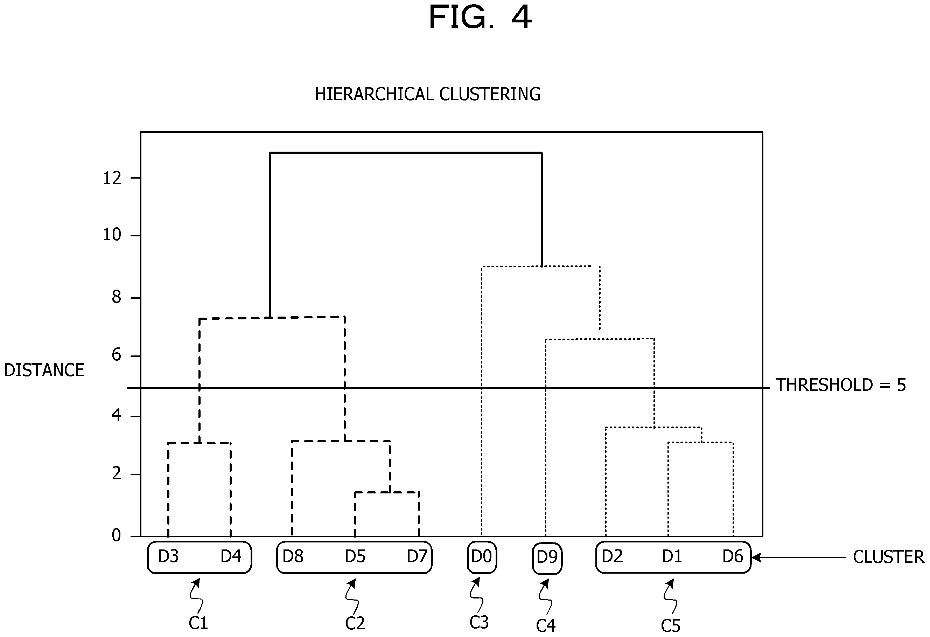

FIG. 4 is a diagram for describing a clustering method by the clustering processing unit 101 of the computer system 1 as an example of the embodiment. In FIG. 4, a dendrogram (tree diagram) in the hierarchical clustering is exemplarily illustrated.

In the hierarchical clustering, clustering is implemented by repeatedly combining (grouping or merging) a plurality of pieces of input data according to a distance between the pieces of data.

In this computer system 1, the clustering processing unit 101 implements the clustering by a farthest neighbor method. Note that, as the distance between the pieces of data in the farthest neighbor method, for example, a Euclidean distance may be used, and the distance may be appropriately changed and implemented.

Furthermore, in the hierarchical clustering, for example, a system administrator or the like may set a distance between the pieces of data for forming the same cluster as a threshold. By setting the threshold, the clustering processing unit 101 clusters pieces of data having a distance less than the threshold to each other so as to form the same cluster. The threshold corresponds to a merge stop condition of a cluster, and may be optionally set by, for example, the system administrator or the like. FIG. 4 illustrates an example of performing the hierarchical clustering on pieces of data represented by reference signs D0 to D9, and the threshold = 5 is set.

By combining (grouping or merging) adjacent pieces of input data in order from ones having the closest distance to each other, for example, data D3 and D4 form one cluster C1. Similarly, data D8, D5, and D7 form a cluster C2, and data D2, D1, and D6 form a cluster C5, respectively. Since both data D0 and D9 are distant from the other pieces of data, the data D0 and D9 independently form independent clusters C3 and C4, respectively.

These clusters C1 to C5 are guaranteed that the distance between the pieces of data in each cluster is less than the threshold (5 in the example illustrated in FIG. 4), thereby implementing bias of the data in a data space.

The clustering processing unit 101 implements clustering in which bias is recognized in teacher data by using such a hierarchical clustering method.

Furthermore, it is desirable that the merge stop condition (threshold) of the cluster is a distance between pieces of input data, which may be regarded as due to bias at the time of acquiring the teacher data. For example, the threshold may be optionally set by a person having domain knowledge of target data based on identity of the data.

The data creation unit 102 creates model creation data (teacher data) and model verification data. The model creation data is teacher data used by the model creation unit 103, which will be described later, to create a machine learning model. The model verification data is teacher data used by the verification unit 105, which will be described later, to verify the created model.

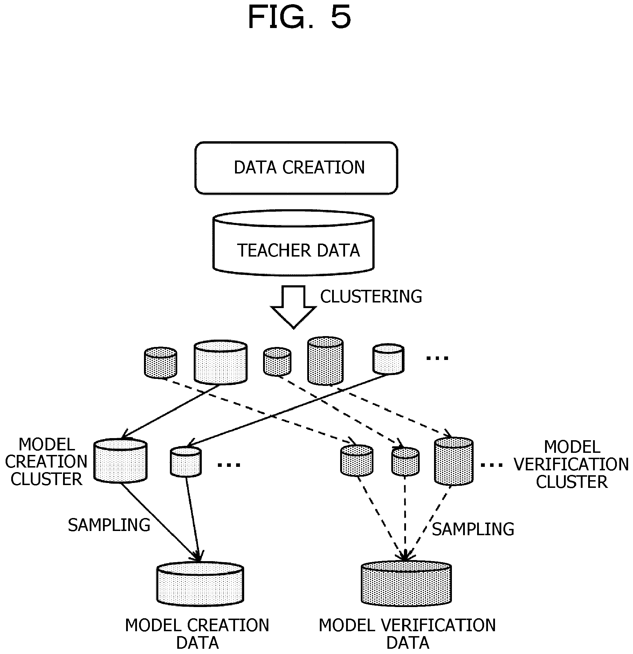

Hereinafter, a process of creating the model by using the model creation data may be referred to as a training phase (first phase), and a process of verifying the model by using the model verification data may be referred to as a verification phase (second phase). FIG. 5 is a diagram for describing processing by the data creation unit 102 of the computer system 1 as an example of the embodiment.

The data creation unit 102 classifies a plurality of clusters created by the clustering processing unit 101 into model creation clusters and model verification clusters. Note that each of the number of model creation clusters and the number of model verification clusters may be appropriately changed and implemented. For example, the plurality of clusters may be classified by randomly allocating the plurality of clusters to the model creation clusters or the model verification clusters, and the classification may be appropriately changed and implemented. Note that the clustering processing unit 101 may classify the plurality of clusters into the model creation clusters or the model verification clusters, and the classification may be appropriately changed and implemented.

In this computer system 1, machine learning and verification are executed by using data from different clusters. In other words, among the plurality of clusters, the machine learning model is created by using data of a first cluster (first group), and output accuracy of the model is verified by using data of a second cluster (second group).

The model creation cluster may be the first group of data used to generate the model by machine learning. Furthermore, the model verification cluster may be the second group of data used to verify output accuracy of the generated model.

The data creation unit 102 evenly samples (extracts) data from the plurality of model creation clusters to create the model creation data. The reason why the data is evenly sampled from the plurality of model creation clusters is that the number of pieces of data may be biased among the plurality of model creation clusters. By performing different types of sampling from the plurality of model creation clusters, the data creation unit 102 creates the plurality of pieces of model creation data.

Similarly, the data creation unit 102 evenly samples (extracts) data from the plurality of model verification clusters to create the model verification data. The reason why the data is evenly sampled from the plurality of model verification clusters is that the number of pieces of data may be biased also among the plurality of model verification clusters. By performing different types of sampling from the plurality of model verification clusters, the data creation unit 102 creates the plurality of pieces of model verification data.

Each of the plurality of model creation clusters, the plurality of model verification clusters, the plurality of pieces of model creation data, and the plurality of pieces of model verification data may be stored in a predetermined storage area of the memory 11, or may be stored in a storage device (not illustrated)

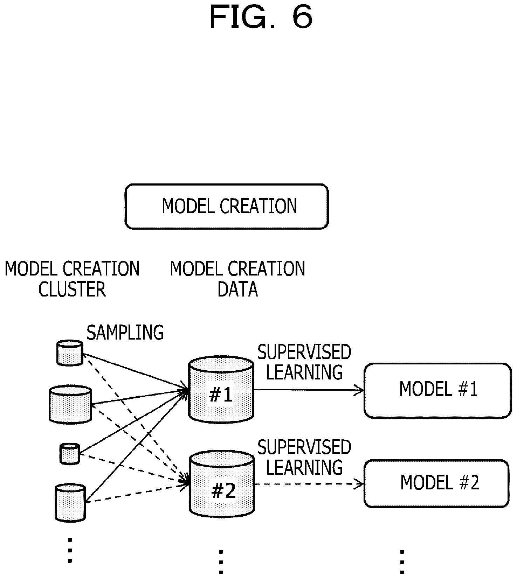

The model creation unit 103 creates a model (training model) by machine learning using model creation data (teacher data). The model receives an input value, makes some evaluation/determination, and outputs an output value. The output of the model may be referred to as a prediction result. Note that the creation of the model may be implemented by using a known method, and description of a model creation method by the model creation unit 103 will be omitted. Furthermore, by using a plurality of pieces of model verification data for the machine learning, the model creation unit 103 creates a plurality of models corresponding to these pieces of model creation data. The model verification data corresponds to data classified into a third group by clustering. FIG. 6 is a diagram for describing processing by the model creation unit 103 of the computer system 1 as an example of the embodiment.

In the example illustrated in FIG. 6, two pieces of model creation data #1 and #2 are illustrated. The model creation unit 103 creates a model #1 by performing supervised learning (machine learning) by using the model creation data #1, and creates a model #2 by performing supervised learning (machine learning) by using the model creation data #2. The model creation data and the model verification data are input to the created models #1 and #2. The model creation data #1 corresponds to first data among pieces of data classified into the first group. The model creation data #2 corresponds to second data among the pieces of data classified into the first group.

The prediction processing unit 104 predicts outputs in a case where prediction target data is input to these models by using a plurality of models created by the model creation unit 103. The prediction processing unit 104 inputs the prediction target data to each of the plurality of models created by the model creation unit 103, and assembles (integrates or aggregates) the outputs (prediction results) of the respective models. The prediction processing unit 104 uses an assembled result as a final output (prediction result). The prediction processing unit 104 corresponds to an assemble processing unit that integrates (assembles) outputs of a plurality of models to generate one output.

As the prediction target data, model creation data is used in the first phase, and model verification data is used in the second phase. In other words, in the first phase, the prediction processing unit 104 inputs the model creation data to each of the plurality of models, and uses a result of assembling outputs of the respective models as a final output (prediction result).

Furthermore, in the second phase, the prediction processing unit 104 inputs the model verification data to each of the plurality of models, and uses a result of assembling outputs of the respective models as a final output (prediction result).

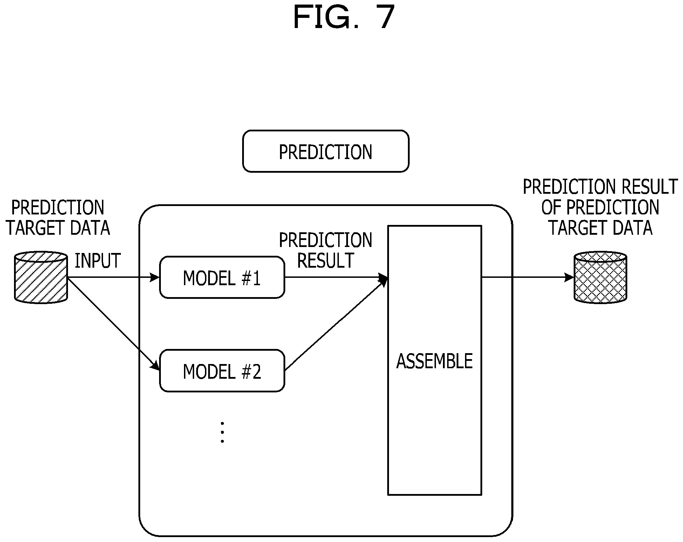

FIG. 7 is a diagram for describing processing by the prediction processing unit 104 of the computer system 1 as an example of the embodiment. In the example illustrated in FIG. 7, prediction target data, in other words, model creation data or model verification data is input to two models #1 and #2. Prediction results output from the respective models #1 and #2 are assembled, and a prediction result (prediction result of the prediction target data) is output.

In the example illustrated in FIG. 7, the prediction target data corresponds to third data included in data classified into the second group. The prediction processing unit 104 calculates first output accuracy based on a first result output by the model #1 in response to the input of the prediction target data (third data) to the model #1 and a second result output by the model #2 in response to the input of the prediction target data (third data) to the model #2.

Note that assembling of outputs of a plurality of models may be implemented by using a known method such as operation of an average value, and description of a model output assembling method by the prediction processing unit 104 will be omitted.

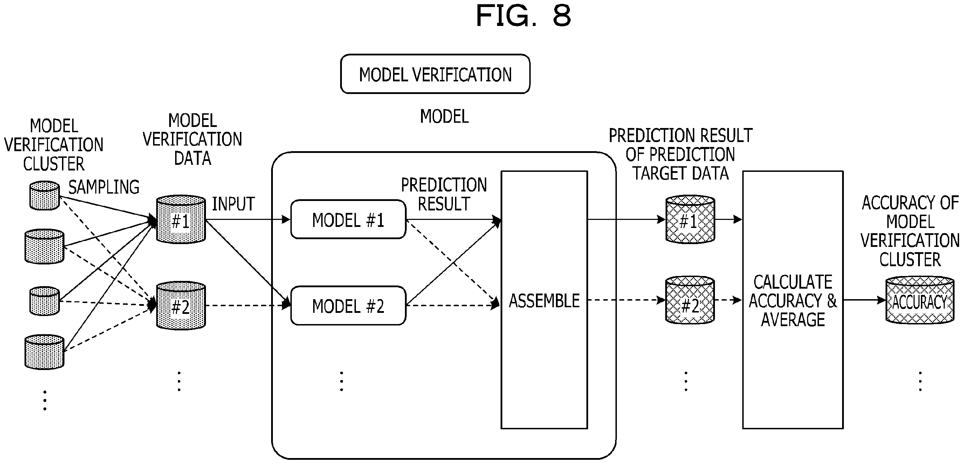

The verification unit 105 verifies a model created by the model creation unit 103 by using model verification data created by the data creation unit 102. FIG. 8 is a diagram for describing processing by the verification unit 105 of the computer system 1 as an example of the embodiment. The verification unit 105 verifies a model created by the model creation unit 103 by using model verification data created by the data creation unit 102.

The verification unit 105 causes a plurality of pieces of the model verification data created by the data creation unit 102 to be input to each of a plurality of the models created by the model creation unit 103. The verification unit 105 inputs, by using the function of the prediction processing unit 104, for example, the model verification data (prediction target data) to each of the plurality of models created by the model creation unit 103, and assembles (aggregates) outputs (prediction results) of the respective models. The prediction processing unit 104 uses an assembled result as a final output (prediction result).

In the example illustrated in FIG. 8, model verification data #1 is input to each of models #1 and #2, prediction results output from the respective models #1 and #2 are assembled, and a prediction result (prediction result of the model verification data) #1 is output. Furthermore, model verification data #2 is input to each of the models #1 and #2, prediction results output from the respective models #1 and #2 are assembled, and a prediction result (prediction result of the model verification data) #2 is output.

The verification unit 105 calculates a correct answer rate (accuracy) by comparing the prediction result #1 with output data of the model verification data #1. Furthermore, the verification unit 105 calculates a correct answer rate (accuracy) by comparing the prediction result #2 with output data of the model verification data #2. The verification unit 105 determines accuracy of a model verification cluster by calculating an average of the accuracy (correct answer rates).

In other words, the verification unit 105 calculates an average of prediction accuracy for each model verification data to acquire final (overall) prediction accuracy for a model verification cluster.

For example, the verification unit 105 may determine whether a difference between accuracy of a prediction result output based on the model verification data and accuracy of a prediction result output based on the model creation data is within a permissible threshold. In other words, the verification unit 105 may determine whether the accuracy of the prediction result output based on the model verification data and the accuracy of the prediction result output based on the model creation data are at the same level of accuracy. Furthermore, the verification unit 105 may determine whether the accuracy of the prediction result output based on the model verification data is equal to or greater than a predetermined threshold.

In the example illustrated in FIG. 8, the model verification data #1 corresponds to the third data included in the data classified into the second group. The model verification data #2 corresponds to fourth data included in the data classified into the second group.

The verification unit 105 calculates the prediction result #1 (first output accuracy) based on a first result output by the model #1 in response to the input of the model verification data (third data) #1 to the model #1 and a second result output by the model #2 in response to the input of the model verification data (third data) #1 to the model #2.

Furthermore, the verification unit 105 calculates the prediction result #2 (second output accuracy) based on a third result output by the model #1 in response to the input of the model verification data (fourth data) #2 to the model #1 and a fourth result output by the model #2 in response to the input of the model verification data (fourth data) #2 to the model #2. The verification unit 105 verifies the prediction accuracy based on these prediction result #1 (first output accuracy) and prediction result #2 (second output accuracy).

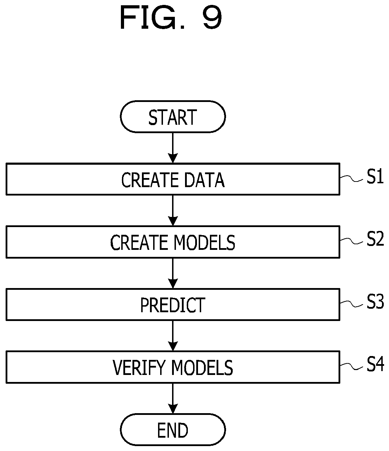

Processing in the computer system 1 as an example of the embodiment configured as described above will be described with reference to a flowchart (Steps S1 to S4) illustrated in FIG. 9.

In Step S1, the clustering processing unit 101 creates a plurality of clusters in which bias may be recognized by performing hierarchical clustering on teacher data prepared in advance. The data creation unit 102 classifies the plurality of clusters created by the clustering processing unit 101 into model creation clusters and model verification clusters.

Then, the data creation unit 102 evenly samples data from the plurality of model creation clusters to create model creation data. At this time, by performing different types of sampling from the plurality of model creation clusters a plurality of times, the data creation unit 102 creates a plurality of pieces of the model creation data.

Furthermore, the data creation unit 102 evenly samples data from the plurality of model verification clusters to create model verification data. At this time, by performing different types of sampling from the plurality of model verification clusters a plurality of times, the data creation unit 102 creates a plurality of pieces of the model verification data.

In Step S2, the model creation unit 103 creates models by using model creation data (teacher data) for machine learning.

In Step S3, the prediction processing unit 104 predicts outputs in a case where prediction target data is input to these models by using the plurality of models created by the model creation unit 103.

In Step S4, the verification unit 105 verifies the models created by the model creation unit 103 by using the model verification data created by the data creation unit 102.

In this way, according to the computer system 1 as an example of the embodiment, the data creation unit 102 allocates one cluster created by the clustering processing unit 101 to either the model creation data or the model verification data. With this configuration, even when there is an exceptional cluster when viewed over the entire input data space, data in the same cluster is included in only one of the model creation data and the model verification data. Therefore, prediction accuracy of the model creation data and prediction accuracy of the model verification data do not increase at the same time. In this way, since the data in the same cluster is not divided into the model creation data and the model verification data, overfitting may be avoided.

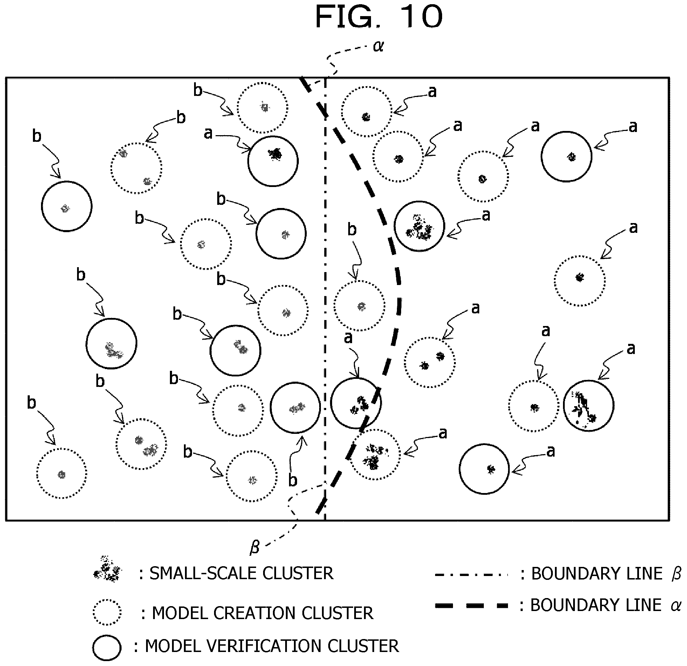

FIG. 10 is a diagram for describing binary classification performed by the training processing unit 100 of the computer system 1 as an example of the embodiment, and exemplarily illustrates teacher data arranged in an input data space. In FIG. 10, an input data space in which a large number of minute points are arranged is exemplarily illustrated. Each of the minute points represents teacher data, and each is plotted at a position corresponding to input data.

Furthermore, in the input data space, a set of pieces of teacher data circled by a broken line indicates a model creation cluster, and a set of pieces of teacher data circled by a solid line indicates a model verification cluster.

Furthermore, in FIG. 10, each cluster is denoted by a reference sign a or a reference sign b. These reference sign a and reference sign b represent an output of the teacher data, and each output of the teacher data constituting the cluster denoted by the reference sign a is a, and each output of the teacher data constituting the cluster denoted by the reference sign b is b. In other words, in the example illustrated in FIG. 10, binary classification that predicts a or b is represented.

In the example illustrated in FIG. 10, when a highly accurate model is created from data sampled from the model creation clusters, the model performs prediction with a thick broken line denoted by a reference sign α as a boundary.

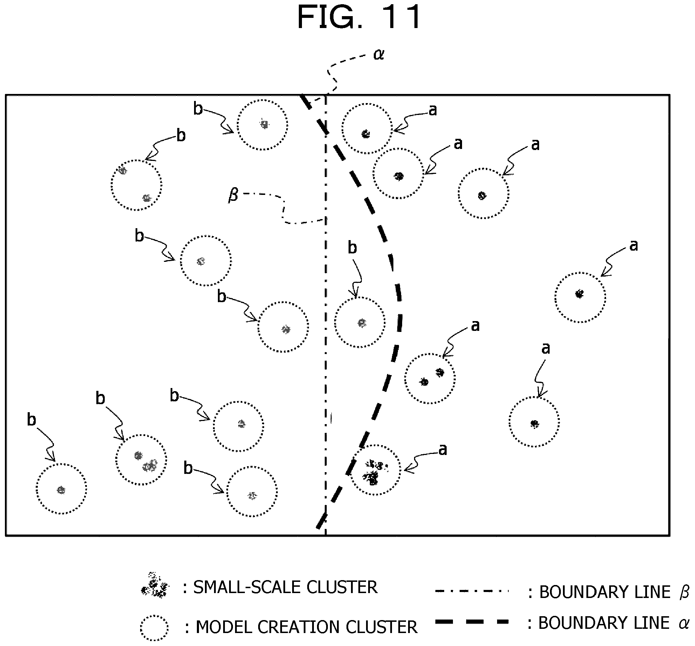

FIG. 11 is a diagram illustrating the extracted model creation clusters in FIG. 10. As illustrated in FIG. 11, for the model creation clusters, all outputs b are arranged on a left side of the thick broken line denoted by the reference sign α, and all outputs a are arranged on a right side thereof. In other words, it may be seen that prediction accuracy for the data sampled from the model creation clusters is high.

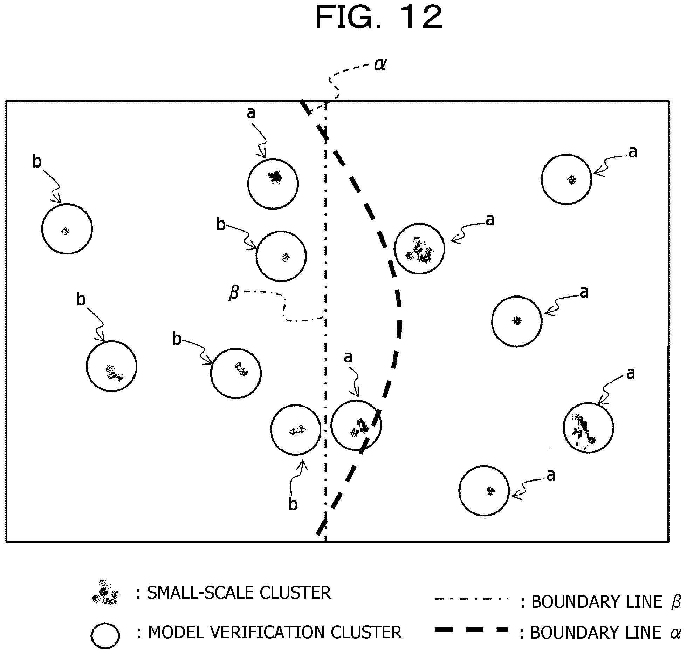

FIG. 12 is a diagram illustrating the extracted model verification clusters in FIG. 10. As illustrated in FIG. 12, for the model verification clusters, the outputs a are also arranged on the left side of the thick broken line denoted by the reference sign α, together with the outputs b, and it may be seen that the prediction accuracy is lower than the data sampled from the model creation clusters illustrated in FIG. 11. In other words, it may be determined that overfitting is performed. In the example illustrated in FIG. 10, a model that performs prediction with an alternate long and short dash line denoted by a reference sign β as the boundary is a suitable model without overfitting.

By performing hierarchical clustering by the clustering processing unit 101, clustering may be performed on the plurality of pieces of teacher data so that bias may be recognized.

The model creation unit 103 uses, for machine learning, data (model creation data) generated by extraction (sampling) from each of a plurality of cluster data groups provided in the model creation clusters. By using the model creation data acquired by performing sampling evenly from the plurality of clusters, output accuracy of the model may be improved.

By applying each of a plurality of pieces of model verification data to the model by the verification unit 105, each piece of data of the plurality of clusters may be reflected in verification, and detection accuracy may be improved.

The disclosed technology is not limited to the embodiment described above, and may be variously modified to be performed without departing from the spirit of the present embodiment. Each configuration and each type of processing of the present embodiment may be selected or omitted as needed or may be appropriately combined.

For example, in the embodiment described above, in the first phase, the data creation unit 102 creates a plurality of pieces of model creation data, and the model creation unit 103 creates a plurality of models by using these plurality of pieces of model creation data. However, the present invention is not limited to this. The model creation unit 103 may create one model by using data of all model creation clusters.

Note that, in this case, in the second phase, it is desirable to create a plurality of pieces of model verification data and apply each of these plurality of pieces of model verification data to the model, as in the embodiment described above. Then, it is desirable that the prediction processing unit 104 obtains accuracy by using a plurality of prediction results output based on these plurality of pieces of input data.

In a case where data of a plurality of clusters is combined into one when verification is performed, accuracy of a cluster with a large number of pieces of data is prioritized, and detection accuracy may deteriorate. Thus, by applying each of the plurality of pieces of model verification data to the model, each piece of the data of the plurality of clusters may be reflected in verification, and the detection accuracy may be improved.

The embodiment described above indicates an example in which machine learning is applied to the neural network. However, the present invention is not limited to this, and may be variously modified to be performed. Furthermore, the present embodiment may be performed and manufactured by those skilled in the art according to the disclosure described above.

### REFERENCE SIGNS LIST

- 1: Computer system
- 10: CPU
- 11: Memory
- 12: Accelerator
- 13: Communication bus
- 100: Training processing unit
- 101: Clustering processing unit
- 102: Data creation unit
- 103: Model creation unit
- 104: Prediction processing unit
- 105: Verification unit

## Claims

1. A machine learning program for causing a computer to execute processing comprising:
clustering a plurality of pieces of data;
generating a model by machine learning that uses data classified into a first group by the clustering; and
verifying output accuracy of the generated model by using data classified into a second group by the clustering.

2. The machine learning program according to claim 1, wherein
the clustering is hierarchical clustering.

3. The machine learning program according to claim 1 or 2, wherein
the processing of generating the model includes machine learning that uses data classified into a third group by the clustering, and
the processing of verifying is executed by using data classified into a fourth group by the clustering.

4. The machine learning program according to any one of claims 1 to 3, wherein
the model is generated by machine learning that uses first data in the data classified into the first group, and
the computer is caused to execute the processing further comprising
generating another model by machine learning that uses second data in the data classified into the first group.

5. The machine learning program according to claim 4, wherein
the processing of verifying includes processing of calculating first output accuracy based on a first result output by the model in response to an input of third data included in the data classified into the second group to the model, and a second result output by the another model in response to an input of the third data to the another model.

6. The machine learning program according to claim 5, wherein
the processing of verifying is executed based on the first output accuracy, and second output accuracy calculated based on a third result output by the model in response to an input of fourth data included in the data classified into the second group to the model, and a fourth result output by the another model in response to an input of the fourth data to the another model.

7. A machine learning method for a computer to execute a process comprising:
clustering a plurality of pieces of data;
generating a model by machine learning that uses data classified into a first group by the clustering; and
verifying output accuracy of the generated model by using data classified into a second group by the clustering.

8. The machine learning method according to claim 7, wherein
the clustering is hierarchical clustering.

9. The machine learning method according to claim 7 or 8, wherein
the processing of generating the model includes machine learning that uses data classified into a third group by the clustering, and
the processing of verifying is executed by using data classified into a fourth group by the clustering.

10. The machine learning method according to any one of claims 7 to 9, wherein
the model is generated by machine learning that uses first data in the data classified into the first group, and
the computer is caused to execute the processing further comprising
generating another model by machine learning that uses second data in the data classified into the first group.

11. The machine learning method according to claim 10, wherein
the processing of verifying includes processing of calculating first output accuracy based on a first result output by the model in response to an input of third data included in the data classified into the second group to the model, and a second result output by the another model in response to an input of the third data to the another model.

12. The machine learning method according to claim 11, wherein
the processing of verifying is executed based on the first output accuracy, and second output accuracy calculated based on a third result output by the model in response to an input of fourth data included in the data classified into the second group to the model, and a fourth result output by the another model in response to an input of the fourth data to the another model.

13. A machine learning apparatus comprising:
a control unit configured to:
cluster a plurality of pieces of data,
generate a model by machine learning that uses data classified into a first group by the clustering, and
verify output accuracy of the generated model by using data classified into a second group by the clustering.

14. The machine learning apparatus according to claim 13, wherein
the clustering is hierarchical clustering.

15. The machine learning apparatus according to claim 13 or 14, wherein
the processing of generating the model includes machine learning that uses data classified into a third group by the clustering, and
the processing of verifying is executed by using data classified into a fourth group by the clustering.

16. The machine learning apparatus according to any one of claims 13 to 15, wherein
the model is generated by machine learning that uses first data in the data classified into the first group, and
the computer is caused to execute the processing further comprising
generating another model by machine learning that uses second data in the data classified into the first group.

17. The machine learning apparatus according to claim 16, wherein
the processing of verifying includes processing of calculating first output accuracy based on a first result output by the model in response to an input of third data included in the data classified into the second group to the model, and a second result output by the another model in response to an input of the third data to the another model.

18. The machine learning apparatus according to claim 17, wherein
the processing of verifying is executed based on the first output accuracy, and second output accuracy calculated based on a third result output by the model in response to an input of fourth data included in the data classified into the second group to the model, and a fourth result output by the another model in response to an input of the fourth data to the another model.
